# EUROPEAN PATENT SPECIFICATION

(11) **EP 3 745 278 B1**
(45) Date of publication and mention of the grant of the patent: **26.06.2024**
(21) Application number: 20177124.3
(22) Date of filing: 28.05.2020
(51) Int. Cl.: G06F 16/25

(54) **SYSTEM AND METHOD FOR INTEGRATING HETEROGENEOUS DATA OBJECTS**
SYSTEM UND VERFAHREN ZUR INTEGRATION VON HETEROGENEN DATENOBJEKTEN
SYSTÈME ET PROCÉDÉ POUR INTÉGRER DES OBJETS DE DONNÉES HÉTÉROGÈNES

(30) Priority: 29.05.2019 FR 1905718; 29.11.2019 FR 1913444; 29.11.2019 US 201916699233
(43) Date of publication of application: 02.12.2020
(73) Proprietor: Amadeus S.A.S., 06410 Biot (FR)
(72) Inventor: BRUN, Pierre, 06410 Biot (FR); HAYS, Jean-Chafic, 06410 Biot (FR); LE METAYER, Fabien, 06410 Biot (FR); BISEGNA, Tony, 06410 Biot (FR); FAUDET, Floriane, 06410 Biot (FR)
(74) Representative: Samson & Partner Patentanwälte mbB

(56) References cited:
- WO-A1-2013/148470
- WO-A2-2012/170565
- US-A1- 2013 151 537
- XIN LUNA DONG ET AL: "Data fusion", PROCEEDINGS OF THE VLDB ENDOWMENT; [ACM DIGITAL LIBRARY], ASSOC. OF COMPUTING MACHINERY, NEW YORK, NY, vol. 2, no. 2, August 2009 (2009-08), pages 1654-1655, XP058359546, ISSN: 2150-8097, DOI: 10.14778/1687553.1687620
- Xin Luna Dong ET AL: "Data fusion", Proceedings of the VLDB Endowment, August 2009 (2009-08), pages 1654-1655, XP055680781, DOI: 10.14778/1687553.1687620 Retrieved from the Internet: URL:https://hpi.de/fileadmin/user_upload/f achgebiete/naumann/publications/2009/DataF usionFinal.pdf [retrieved on 2020-03-27]

## Description

The specification relates generally to computing systems, and specifically to a system and method for integrating heterogeneous data objects.

### Background

Obtaining certain types of generated data may be performed via two or more distinct generation mechanisms involving separate computing subsystems, communication protocols and the like. However, subsets of such generated data obtained via different mechanisms may nevertheless be associated. For example, in connection with items such as travel-related products and services (e.g. flights, hotel reservations and the like), an itinerary for a given customer may include a plurality of flights, some of which are obtained via a first generation mechanism and others of which are obtained via a second generation mechanism. Because the generation mechanisms are independent from one another, display and applying updates to the resulting subsets of data may be accommodated by independent interfaces.

WO2012/170565 A2 relates to delivering aggregated data from disparate source systems (e.g. CRM, databases, such as SAP, Microsoft Dynamics CRM, Salesforce^{®}, ERP, etc.), making the data available to another system or end user with the functionality to read, create, update, and/or delete the source data. An integration platform has access to an SQL database with metadata with mappings providing logical association between the source data and another scheme which may be stored in a Virtual Table. When an update, create or delete operation is desired, a respective field in the Virtual Table is used to indicate the appropriate record in the source systems to effect the operation,

US 2013/151537 A1 disclsoes systems and methods for aligning records for visual comparison. One or more non-reference record is merged into the reference record to generate a merged reference record. The merged reference record includes one or more fields missing in the reference record. The missing fields are included as blank fields from the non-reference records. The merged reference record is merged into a non-reference record to generate the merged non-reference record. The merged non-reference record includes fields missing in the non-reference record. Missing fields are included as blank fields. The merged records are displayed on a user interface in a card view.

### Summary

The invention is defined by the attached claims.

### Brief Descriptions of the Drawings

Embodiments are described with reference to the following figures, in which:
FIG. 1 is a diagram illustrating a system for providing auxiliary data access;
FIG. 2 is a diagram illustrating certain internal components of the client subsystem and the provider subsystem of FIG. 1;
FIG. 3 is a flowchart of a method of integrating heterogeneous data objects;
FIG. 4 is a diagram illustrating a performance of block 305 of the method of FIG. 3;
FIG. 5 is a diagram illustrating another aspect of the performance of block 305 of the method of FIG. 3;
FIG. 6 is a diagram illustrating a performance of block 330 of the method of FIG. 3;
FIG. 7 is a diagram illustrating a performance of block 335 of the method of FIG. 3;
FIG. 8 is a diagram illustrating a performance of block 345 of the method of FIG. 3; and
FIG. 9 is a diagram illustrating another example implementation of the method of FIG. 3.

### Detailed Description

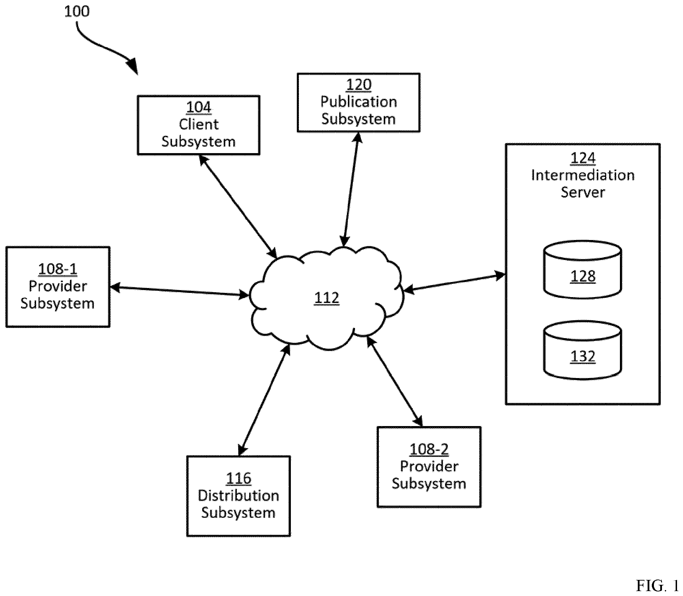

FIG. 1 depicts a system 100 for integrating heterogeneous data objects. Within the system 100, various computing subsystems interact to generate and process data relating to any of a wide variety of activities. In the examples discussed below, the subsystems of the system 100 interact to generate and process data relating to the delivery of items to customers. The items, in the examples below, are travel-related products and services, such as flight tickets, hotel reservations, vehicle rental reservations, and the like. A wide variety of other activities can be enabled by the exchange of data between the subsystems shown of the system 100, and the specific nature of the data processed within the system 100 is not particularly limited.

In the illustrated example, the system 100 includes a client subsystem 104, operated by a client entity that may also be referred to as a seller. The seller can be, for example, a travel agency. The client subsystem 104 generates requests, e.g. on behalf of customers, for travel items. The requests specify various attributes of the travel items, such as origin and destination locations, times and dates of travel, and the like. Responses to requests from the client subsystem 104 are generated by, or on behalf of, entities that provide the items, referred to herein as providers. Therefore, in the present example the providers are entities such as airlines, hotel operators or the like that deliver the items to the customer, or to other such entities for eventual delivery to the customer, following purchase of the items (such purchase being effected, for example, via the client subsystem 104).

Each provider entity operates a provider subsystem 108; two example provider subsystems 108-1 and 108-2 are shown in FIG. 1. Each of the client subsystem 104 and the provider subsystems 108 are implemented as at least one computing device with input and output assemblies and communications devices for exchanging data via a network 112. The network 112 can include any suitable combination of local-area and wide-area networks, including the Internet. Although a single client subsystem 104 and two provider subsystems 108 are shown in FIG. 1, the system 100 can include a greater or smaller number of client subsystems 104 and provider subsystems 108 in other examples.

The generation of responses to requests from the client subsystem 104 can take various forms. In the illustrated example, provider subsystem 108-1 is assumed to generate responses to such requests locally, although as will be seen below, the requests are not transmitted directly from the client subsystem 104 to the provider subsystem 108-1. That is, the provider subsystem 108-1 includes an offer generation module (e.g. computer readable instructions and corresponding execution hardware, along with various stored data for use in generating responses) that enables the provider subsystem 108-1 to generate response data based on the attributes specified in the request originated by the client subsystem 104. The response data may also be referred to as "offer data", and defines one or more items that match or partially match the requested attributes.

Other provider subsystems 108, such as the provider subsystem 108-2 in the present example, may not generate responses to requests from the client subsystem 104. Instead, such responses may be generated by a distribution subsystem 116. The provider subsystem 108-2 may, for example, publish data defining the items offered by the provider entity that operates the provider subsystem 108-2 to a publication subsystem 120. The publication subsystem 120 may be operated by a third party (i.e. distinct from the above-mentioned provider entities), and may receive published item data such as flight schedules, fares and the like, from one or more provider subsystems 108. The distribution subsystem 120, in turn, may retrieve data from the publication system 120 for use in generating responses to requests from the client subsystem 104 on behalf of the provider subsystem 108-2.

In some examples, the provider subsystems 108 need not be restricted to the use of one mechanism or the other. For example, data representing items provided by the operator of the provider subsystem 108-1 may be obtained via either of the above mechanisms. In further examples, the provider subsystem 108-2 may also be capable of generating responses to client requests locally.

As will now be apparent to those skilled in the art, the generation and transmission of requests by the client device 104, and the generation of response data by or for the provider subsystems 108, can be performed according to either of two distinct mechanisms. The first mechanism involves the generation of response data locally by a provider subsystem 108, and the second mechanism involves the generation of response data by a third party (e.g. the distribution subsystem 116), for example on the basis of data previously published by the provider subsystem 108 (e.g. stored by the publication system 120).

In addition, the distinct mechanisms by which response data may be generated and provided to the client subsystem 104 can involve the use of distinct data exchange standards, communication protocols and the like. For example, the first mechanism mentioned above, in which response data is generated by the provider subsystem 108-1 itself, may be implemented according to the New Distribution Capability (NDC) standard. The NDC standard specifies an eXtensible Markup Language (XML) based data format (e.g. specifying message syntax, API calls and the like) for messages exchanged between client subsystems 104 and provider subsystems 108. The second mechanism, in contrast, in which response data is generated by the distribution subsystem 116, may be implemented as a Global Distribution System (GDS). The second mechanism, therefore, may employ message syntax, sequencing and the like as specified by the Electronic Data Interchange For Administration, Commerce and Transport (EDIFACT) standard.

In other words, data defining items may be obtained by the client subsystem 104 via either or both of two distinct mechanisms, each of which involves interactions by distinct computing subsystems according to separate communication protocols, message syntax and the like. As a result, the data defining such items may not be available to the client subsystem 104 in a consistent format. The client subsystem 104 may therefore acquire data defining a first subset of items via the first mechanism, and data defining a second subset of items via the second mechanism. Such data may be obtained, however, on behalf of a common customer; in a previous system, the client subsystem 104 may be unable to display or otherwise present the above data simultaneously.

The system 100 therefore implements additional functionality to enable the client subsystem 104 to retrieve and display, simultaneously, a set of related data that was generated via either or both of the above mechanisms. That is, the system 100 enables provision of a common interface at the client subsystem 104 for viewing data obtained via either or both of the mechanisms. The system 100 also enables the client subsystem 104 to make updates to item data from the common interface, irrespective of the mechanism by which the data was generated (and therefore of the mechanism employed to update the data).

As noted above, the client subsystem 104 does not interact directly with the provider subsystem 108-1. In the present example, the client subsystem 104 also does not interact directly with the distribution subsystem 116. Rather, the system 100 includes an intermediation server 124, and requests generated by the client subsystem 104 are transmitted via the network 112 to the intermediation server 124. The intermediation server 124 receives requests from the client subsystem 104, and passes such requests to the provider subsystems 108 and/or the distribution subsystem 116. The intermediation server 124 also receives responses from the provider subsystems 108 and/or distribution subsystem 116, for return to the client subsystem 104.

The intermediation server 124, in the illustrated example, hosts data defining items for the client subsystem 104, in addition to relaying data between the client subsystem 104 and the other subsystems shown in FIG. 1. The client subsystem 104, in other words, may not store persistent copies of data defining items locally. Instead, the client subsystem 104 may (e.g. following any suitable authentication process) access such data stored at the intermediation server 124. The intermediation server 124 maintains two repositories 128 and 132, each containing records of item data generated via the first and second mechanisms, respectively. For example, the repository 128 in the present example contains item data obtained via the first mechanism (e.g. according to the NDC standard mentioned above), and the repository 132 contains item data obtained via the second mechanism (e.g. according to the GDS standard mentioned above).

In other examples, the intermediation server 124 can store the above item data in a single repository, with each record including a flag or other indicator of the mechanism by which the data therein was acquired. In any event, as will be discussed in greater detail below, the intermediation server 124 integrates a record from the second repository 132 into a record from the first repository 128 to enable presentation of data from both records to the client subsystem 104 in a common interface.

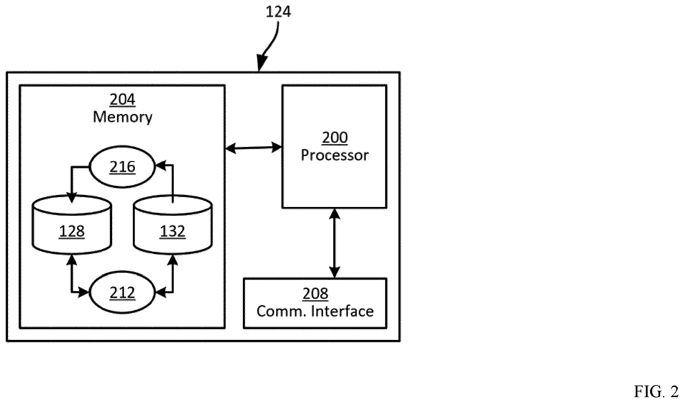

Before further discussion of the functionality of the various components of the system 100, certain internal components of the intermediation server 124 will be described in connection with FIG. 2.

Turning to FIG. 2, the intermediation server 124 includes at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the server 124 to communicate with the other computing devices of the system 100 via the network 112. The communication interface 208 therefore includes any necessary components (e.g. network interface controllers (NICs), radio units, and the like) to communicate via the network 112. The specific components of the communication interface 208 are selected based on the nature of the network 112. The server 124 can also include input and output devices connected to the processor 200, such as keyboards, mice, displays, and the like (not shown).

The components of the server 124 mentioned above can be deployed in a single enclosure, or in a distributed format. In some examples, therefore, the server 124 includes a plurality of processors, either sharing the memory 204 and communication interface 208, or each having distinct associated memories and communication interfaces.

The memory 204 stores the repositories 128 and 132 mentioned above, as well as computer-readable instructions executable by the processor 200 to implement various functionality. The computer-readable instructions may also be referred to as applications, and in the illustrated example the memory 204 stores a request handling application 212 and a content integration application 216 (also referred to herein simply as the applications 212 and 216, respectively). In the description below, the processor 200, and more generally the server 124, are said to perform, or to be configured to perform, those actions. It will be understood that they are so configured via the execution (by the processor 200) of the instructions of the applications stored in memory 204.

Execution of the application 212 by the processor 200 configures the server 124 to receive requests from the client subsystem 104 and interact with one or more of the provider subsystems 108 and distribution subsystem 116 to obtain response data for storage in the repositories 128 and/or 132. Execution of the application 212 also configures the server 124 to provide the above-mentioned common interface to the client subsystem 104, from which the client interface generates requests to update item data via either of the mechanisms mentioned earlier.

Via execution of the application 212, for example, the intermediation server 124 can implement functionality as set out in Applicant's co-pending application no. FR 1905718 to provide the common interface. Such functionality includes the provision of data object definitions and update definitions that permit data to be stored in a common, aggregated format regardless of the source of such data (i.e. whether the data was acquired via the first mechanism or the second mechanism). For example, the data may be stored in a common format, regardless of originating mechanism, in the repository 128. The repository 128 may therefore be referred to as the primary or destination repository in the discussion below.

However, in other instances the client subsystem 104 may initiate the acquisition of item data via the second mechanism mentioned earlier (e.g. via GDS). The intermediation server 124 may, for example, also include a further application (not shown) that enables the client subsystem 104 to explicitly request item data obtained via the distribution subsystem 116, which is stored in the repository 132 and is therefore not available via the above-mentioned common interface.

The server 124 is therefore also configured, via execution of the integration application 216, to integrate data from the repository 132 into the repository 128 upon instructions from the client subsystem 104. Any data integrated by the application 216 is made available via the above-mentioned common interface, and may therefore be viewed and updated by the client subsystem 104 alongside data obtained via the first mechanism (e.g. NDC).

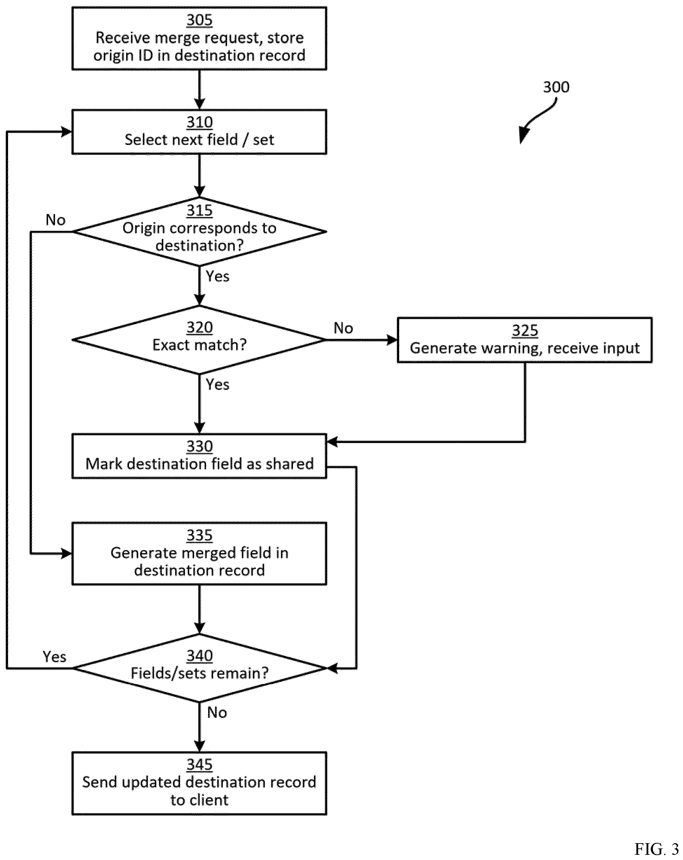

Turning now to FIG. 3, certain aspects of the operation of the system 100 will be described in greater detail. Specifically, FIG. 3 illustrates a method 300 of integrating heterogeneous data objects. The performance of the method 300 will be discussed in conjunction with its performance within the system 100, and specifically by the intermediation server 124 via execution of the integration application 216.

At block 305, the server 124 receives a request, at the communications interface 208, from the client subsystem 104 to merge or integrate records containing data generated via distinct mechanisms. In particular, the request includes an instruction to merge a record from the repository 128 with a record from the repository 132. The record from the repository 128 is also referred to as the destination record, as the final product of the merging operation will be stored in the destination record. The record from the repository 132, meanwhile, is also referred to as the originating record, as the data from the originating record is imported into the destination record (e.g. as indicated by the arrows connecting the application 216 to the repositories 128 and 132 in FIG. 2).

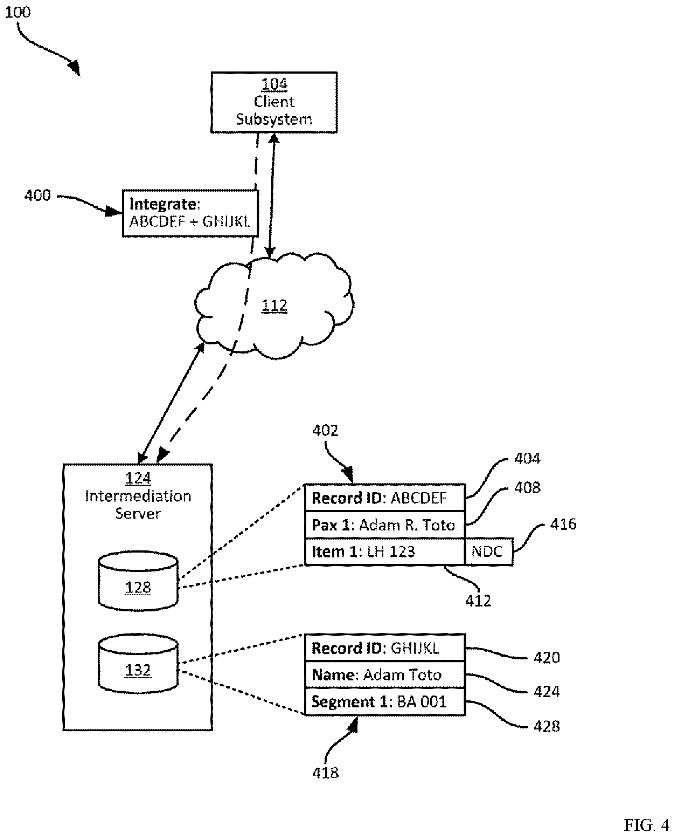

Turning briefly to FIG. 4, an example performance of block 305 is shown. The system 100 is shown in simplified form in FIG. 4, omitting all but the client subsystem 104, the network 112 and the server 124. A request 400 is transmitted from the client subsystem 104 to the server 124 via the network 112, containing an originating record identifier "GHIJKL" and a destination record identifier "ABCDEF". The request can have a wide variety of formats beyond that shown in FIG. 4.

The records having the above identifiers are also shown in FIG. 4. In particular, the repository 128 contains a record 402 (the destination record), having a record identifier 404 and fields or subsets of fields 408 and 412. In addition, the record 402 contains a content type indicator field 416 indicating which generation mechanism was employed to generate the data in the field or set 412. The repository 132 contains a record 418 having a record identifier 420 and fields or sets of fields 424 and 428. The content of the records 402 and 418 will be discussed in greater detail. In general, the request 400 is an instruction to the server 124 to integrate the data in the record 418 into the record 402, in order to enable viewing and updating of the data from both the records 402 and 418 via the above-mentioned common interface.

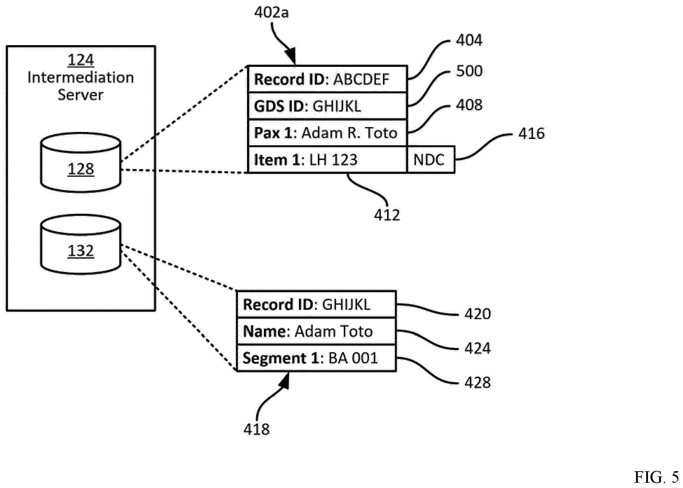

Returning to FIG. 3, having received the request at block 305, the server 124 retrieves the relevant records (i.e. the records 402 and 414 in the example illustrated in FIG. 4) and stores the originating record identifier 420 in the destination record 402. Thus, in the present example, as shown in FIG. 5, an updated destination record 402a is generated from the destination record 402. The updated destination record 420a includes the previous contents of the record 402, as well as an originating record identifier 500. The originating record identifier 500 enables the server 124 to continue interacting with, for example, the distribution subsystem 116 to update data imported from the record 418 even after the integration is complete.

At block 310, the server 124 selects a field of set of fields from the record 418 to integrate into the record 402a. For example, the server 124 can select the "name" field 424 for integration at a first performance of block 310. At block 315, the server 124 determines whether the selected field in the originating record 418 matches a corresponding field in the destination record 402a. The corresponding field in the destination record 402a can be identified by way of a stored field mapping maintained at the server 124. The records of the repository 128 each have the same population of fields, although the content of those fields varies from record to record, and certain fields may be repeated different numbers of times (e.g. to represent multiple linked items). Similarly, the records of the repository 132 each have the same population of fields, though the structure of those fields may vary from the fields of records in the repository 128.

The server 124 can store a preconfigured field mapping that establishes which fields of any given record in the repository 128 correspond to which fields of any given record in the repository 132. In other words, the field mapping indicates which fields within the repositories 128 and 132 contain corresponding types of data. For example, the field mapping in the present example can indicate that fields 408 in the repository 128 (containing traveler names) map to fields 424 in the repository 132 (which also contain traveler names).

Thus, at block 315, the server 124 compares the contents of the field 408 as shown in FIGS. 4 and 5 with the contents of the field 424 as shown in FIGS. 4 and 5. The determination at block 315 can be a determination of whether the fields match exactly. However, in the present example the server 124 is also configured to detect potential data collisions, in which fields that are not exactly matched should in fact be merged into a single field. Therefore, at block 315 the server 124 can generate a similarity metric (e.g. also referred to as a string distance function) from the selected fields. For example, the metric may indicate as a percentage how similar the content of the compared fields is, with 100% indicating an exact match. The determination at block 315 can be affirmative when the similarity metric exceeds a predefined threshold (e.g. 80%), and negative otherwise.

As seen from FIG. 5, in the present example the determination is assumed to be affirmative because, although the names shown in the fields 408 and 424 do not match exactly, they are separated by only three characters ("R", a period, and a space between the first and last names "Adam" and "Toto"). The server 124 therefore proceeds to block 320.

At block 320, the server 124 determines whether the selected fields match exactly. For example, the server 124 can determine whether the above-mentioned metric is 100%. When the determination at block 320 is negative, as in the example illustrated in FIGS. 4 and 5, the server 124 proceeds to block 325. At block 325, the server 124 can generate a warning, such as a prompt sent to the client subsystem 104 requiring operator action to select one of the available values (e.g. "Adam Toto" or "Adam R. Toto") for storage in the merged record. The server 124 awaits input from the client subsystem 104 making such a selection.

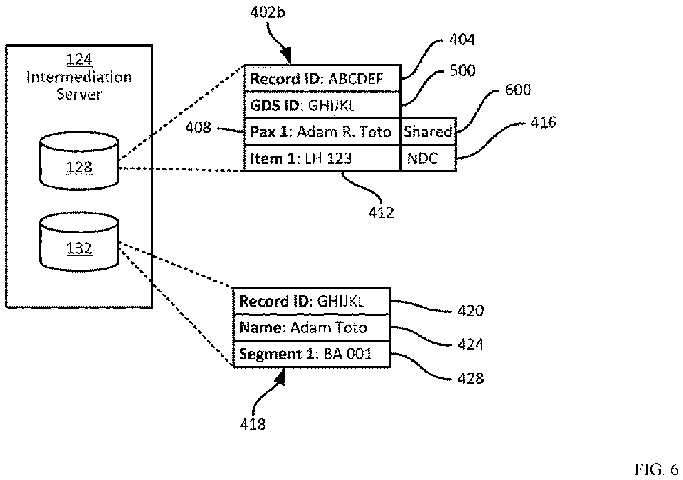

In the present example performance of the method 300, it is assumed that the client subsystem 104, in response to the prompt generated at block 325, transmits a selection of the string "Adam R. Toto" for use in the merged field. Therefore, at block 330, the server 124 does not update the contents of the field 408, but marks the field 408 as a shared field, e.g. with a flag 600 as shown in FIG. 6. FIG. 6 illustrates a further updated version of the record 402, indicated as 402b. The flag 600 indicates that the field 408 is associated with content obtained via both of the above-mentioned mechanisms. In some examples, the server 124 can also be configured to send an instruction via the second (e.g. GDS-based) mechanism to update the name stored in the field 424 to reflect the name as stored in the field 408. When both versions of the name (i.e. as shown in the fields 408 and 424) are retained, any instructions sent via the second mechanism use the name as shown in the field 424.

Following the performance of block 330, the server 124 proceeds to block 340 and determines whether fields or sets of fields remain to be processed. When the determination is affirmative at block 340, the server 124 returns to block 310 and selects the next field in the originating record 418, e.g. the field 428. In the present example, the field mapping is assumed to indicate that "segment" fields in originating records of the repository 132 correspond to "item" fields in destination records of the repository 128. Therefore, at block 315 the field 428 is compared to the field 412 as described above in connection with the fields 424 and 408.

As is evident from FIGS. 4-6, the values stored in the fields 428 and 412 have little in common. The field 412 stores an identifier for a Lufthansa flight, while the field 428 stores an identifier for a British Airways flight. The fields 412 and 428 may include subfields or associated fields containing, for example, price information, origin and destination locations, and the like. Such fields may also be compared according to the field mapping. In other examples, however, only a main value (such as the above-mentioned flight identifiers) may be compared at block 315, and the subfields or associated fields can all be processed according to the determination based on the main field.

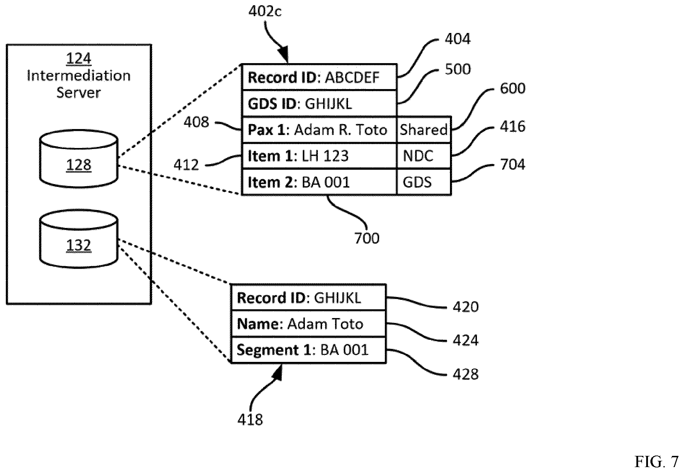

Following a negative determination at block 315, the server 124 proceeds to block 335. At block 335, the server 124 generates a new merged field in the destination record 402, and inserts therein the content of the originating field (i.e. the field 428 in this example). FIG. 7 illustrates the result of a performance of block 335. In particular, the record 402b has been updated to a record 402c, containing (in addition to previously discussed content) a field 700 that contains the flight identifier imported from the field 428 of the record 418. In addition, as shown in FIG. 7, the server 124 marks the merged field 700 as being associated with the originating record. In the invention, the marking is performed by storing a flag 704 with the field 700 that indicates the distribution channel (i.e. the generation mechanism) through which the content of the field 700 was obtained. Other ways of marking the field 700 may also be contemplated, but are not within the scope of the invention. For example, the identifier "GHIJKL" itself of the record 418 can be used as a flag associated with the field 700.

The creation of a field such as the field 700 at block 335 may include transforming the data in the field 428 according to format and syntax requirements of the repository 128. Such transformation can be performed according to the data object definitions mentioned above and described in detail in the co-pending application FR 1905718.

The above process is repeated until a negative determination results from block 340, indicating that the entirety of the originating record 418 has been integrated into the destination record 402. The server 124 then proceeds to block 345, at which the server 124 can transmit the updated record 402c to the client subsystem 104 for simultaneously display of content obtained via both generation mechanisms. In some examples, the record 418 is discarded or marked as inactive when generation of the record 402c is complete.

The system 100 therefore enables common viewing and editing of data at the client subsystem 104 for data that was initially generated via distinct, conventionally incompatible data generation mechanisms. In addition, the processes above enable continued updating of the data via such generation mechanisms by marking portions of the integrated data record with an indication of their associated generation mechanism.

Variations to the above systems and methods are contemplated. For example, upon receiving a request at block 305 the server 124 can apply security policies to the request, e.g. to determine whether the client subsystem 104 has access to both the records identified in the request. For example, each record in the repositories 128 and 132 can include identifiers of entities with access to the records, and the server 124 can be configured to verify that the client subsystem 104 appears in such identifiers in both records identified by the request.

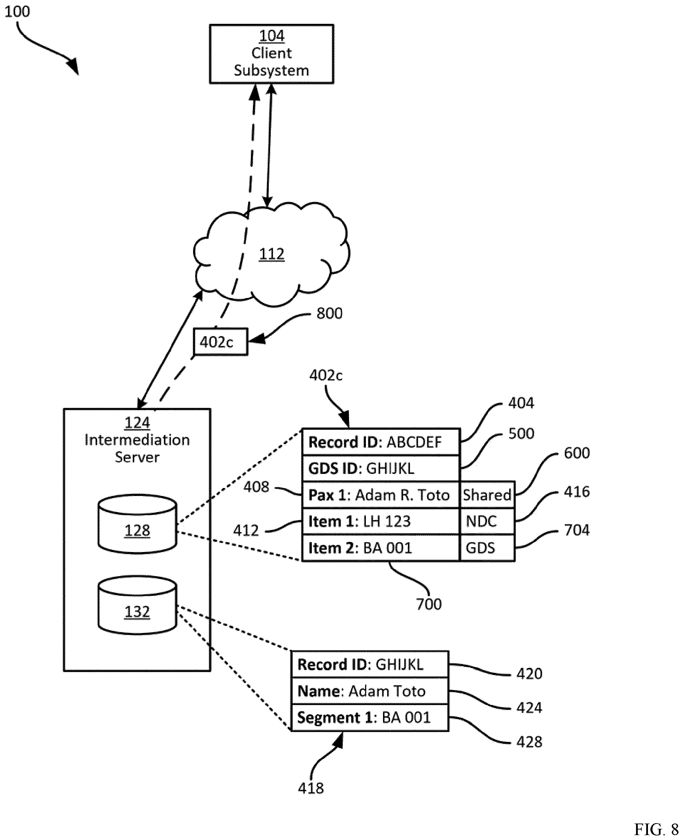

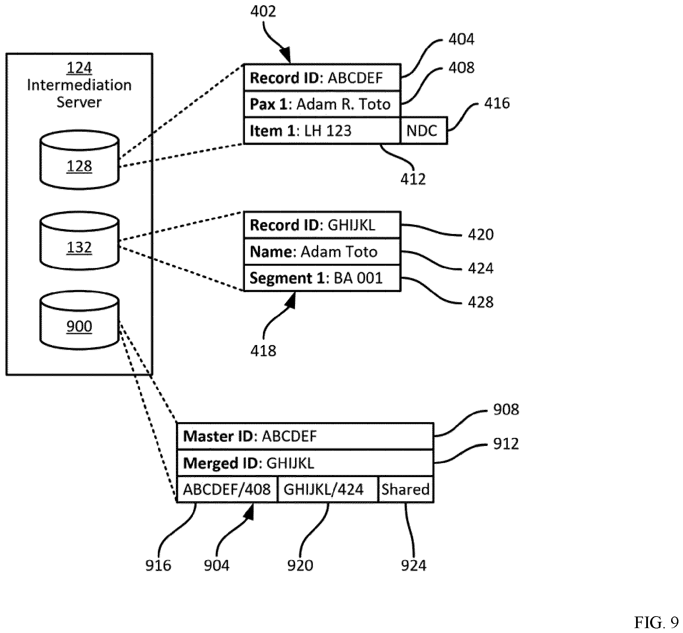

In other implementations, data from an originating record such as the record 418 is not merged directly into a destination record such as the record 402. In other words, in such implementations a record such as the record 402c is not produced via performance of the method 300. Instead, as shown in FIG. 9, the intermediation server can maintain an additional repository 900. Rather than merging data from the record 418 into the record 402 to produce an updated version of the record (e.g. the record 402c as shown in FIG. 8), the intermediation server creates an integration record 904 in the repository 900 and stores information therein permitting the record 402c to be produced on the fly for transmission to the client subsystem 104 upon request.

More specifically, the record 904 contains a master record identifier 908, corresponding to the record 402, and a merged record identifier 912 corresponding to the record 418. The merged record identifier, in other words, takes the place of the originating record identifier 500 discussed earlier. In addition, the record 904 contains one or more sets of fields indicating shared relationships between fields of the records 402 and 418. In the illustrated example, therefore, the record 904 contains a set of fields including an destination field identifier 916, an originating field identifier 920, and a flag 924 similar to the flag 600 mentioned earlier. In some examples, the flag 924 can be omitted, as the presence of the identifiers 916 and 920 implies that those fields are shared. The record 904 can also contain an identifier of a controlling entity, such as the provider subsystem 108-1.

If a request is subsequently received for the record identifier "ABCDEF", the intermediation server 124 retrieves the record 402 itself, as well as the record 900, and generates the record 402c based on the records 402, 900 and 418 for transmission to the requesting entity. The record 402c need not be persistently stored, however.

In the event of a negative determination at block 320, the master record identifier in the record 904 dictates which "version" of conflicting data is to be employed. The client subsystem 104 may still, however, be prompted to edit either of the records 402 and 418 to remove the collision.

In other examples, the performance of blocks 320 to 330 can be omitted for certain portions of a record. For example, in the present example in which certain fields of each record define items, the likelihood of such fields colliding (i.e. containing data defining the same item) may be low, and blocks 320 to 330 may therefore be performed only for customer identification fields such as the fields 408 and 424. In other words, for some fields the determination at block 315 can be automatically negative, relieving the server 124 of the need to perform the similarity computations mentioned earlier. The field mapping may indicate which fields the above shortcut applies to.

Those skilled in the art will appreciate that in some embodiments, the functionality of the applications 212 and 216 may be implemented using pre-programmed hardware or firmware elements (e.g., application specific integrated circuits (ASICs), electrically erasable programmable read-only memories (EEPROMs), etc.), or other related components.

## Claims

1. A method of integrating data objects, the method comprising:
a. storing, at an intermediation server (124) maintaining a first repository (132) and a second repository (128), (i) an originating record (418) containing a first unique identifier (420) and a first set of data fields defining a first item, generated by a first generation mechanism and supplied by a first provider, in the first repository (132), and (ii) a destination record (402) containing a second unique identifier (404) and a second set of data fields defining a second item, generated by a second generation mechanism and supplied by a second provider, in the second repository (128);
b. receiving (305), at the intermediation server (124), from a client device (104), an instruction (400) to merge the originating record (418) into the destination record (402), the instruction (400) containing the first and second unique identifiers (404, 420);
c. in response to receiving the instruction (400), updating the destination record in the second repository (128) by:
i. storing the first unique identifier (420) in the destination record (402);
ii. comparing (310, 315, 320) the first set of data fields with the second set of data fields;
iii. for each data field of the first set that matches a corresponding data field of the second set, marking (330) the corresponding data field of the second set in the destination record (402) as a shared field; and
iv. for each data field of the first set that does not match a corresponding data field of the second set, creating (335) a merged data field in the destination record (402), inserting therein the content of the corresponding data field of the first set in the originating record (418), and marking the merged data field as being associated with the originating record by storing a flag (600) with the merged field that indicates the generation mechanism through which the content of the merged field was obtained; and
d. sending (345) the updated destination record (402a, 402b, 402c) to the client device (104) for enabling viewing and editing of the data in the updated destination record via a common interface provided by the intermediate server (124), wherein the common interface enables the client device (104) to generate requests for updating data fields of the updated destination record (402) via the generation mechanism indicated by the flag (600).

2. The method of claim 1, wherein comparing the first set of data fields with the second set of data fields includes:
a. retrieving a field mapping identifying, for each of the first set of data fields, a corresponding field of the second set; and
b. comparing each of the first set of data fields to the corresponding field of the second set, according to the field mapping.

3. The method of claim 1 or claim 2, further comprising storing, in each merged data field, an indication (704) that the merged data field is associated with the originating record (418).

4. The method of claim 3, wherein the indication (704) that the merged data field is associated with the originating record (418) includes the first unique identifier (420).

5. The method of any one of claims 1 to 4, wherein the comparing includes:
a. determining, for each data field of the first set and the corresponding data field of the second set, a similarity metric; and
b. detecting a match between the data field of the first set and the corresponding data field of the second set when the similarity metric is above a threshold.

6. An intermediation server (124) for integrating data objects, comprising:
a. a communications interface (208);
b. a memory (204), storing a first repository (132) and a second repository (120), (128); and
c. a processor (200) connected with the communications interface and the memory, the processor configured to:
to perform the method of any one of claims 1 to 5.

7. A computer program product comprising program code instructions stored on a computer readable medium to execute the method steps according to any one of the claims 1 to 5 when said program is executed on a computer.

## Patentansprüche

1. Verfahren zur Integration von Datenobjekten, wobei das Verfahren umfasst:
a. Speichern, bei einem Intermediation-Server (124), der ein erstes Repository (132) und ein zweites Repository (128) unterhält, (i) eines Ursprungsdatensatzes (418) mit einem ersten eindeutigen Identifier (420) und einem ersten Satz von Datenfeldern, die einen ersten Artikel definieren, der von einem ersten Erzeugungsmechanismus erzeugt und von einem ersten Anbieter bereitgestellt wird, in dem ersten Repository (132), und (ii) eines Zieldatensatzes (402) mit einem zweiten eindeutigen Identifier (404) und einem zweiten Satz von Datenfeldern, die einen zweiten Artikel definieren, der von einem zweiten Erzeugungsmechanismus erzeugt und von einem zweiten Anbieter bereitgestellt wird, in dem zweiten Repository (128);
b. Empfangen (305), an dem Intermediation-Server (124), einer Anweisung (400) von einem Client-Gerät (104), um den Ursprungsdatensatz (418) in den Zieldatensatz (402) zusammenzuführen, wobei die Anweisung (400) den ersten und den zweiten eindeutigen Identifier (404, 420) enthält;
c. als Antwort auf den Empfang der Anweisung (400), Aktualisieren des Zieldatensatzes im zweiten Repository (128) durch:
i. Speichern des ersten eindeutigen Identifiers (420) im Zieldatensatz (402);
ii. Vergleichen (310, 315, 320) des ersten Satzes von Datenfeldern mit dem zweiten Satz von Datenfeldern;
iii. für jedes Datenfeld des ersten Satzes, das mit einem entsprechenden Datenfeld des zweiten Satzes übereinstimmt, Markieren (330) des entsprechenden Datenfeldes des zweiten Satzes in dem Zieldatensatz (402) als ein gemeinsames Feld; und
iv. für jedes Datenfeld des ersten Satzes, das nicht mit einem entsprechenden Datenfeld des zweiten Satzes übereinstimmt, Erzeugen (335) eines zusammengeführten Datenfeldes in dem Zieldatensatz (402), Einfügen des Inhalts des entsprechenden Datenfeldes des ersten Satzes in den Ursprungsdatensatz (418) und Markieren des zusammengeführten Datenfeldes als mit dem Ursprungsdatensatz verbunden, indem ein Flag (600) mit dem zusammengeführten Feld gespeichert wird, das den Erzeugungsmechanismus angibt, durch den der Inhalt des zusammengeführten Feldes erhalten wurde;
d. Senden (345) des aktualisierten Zieldatensatzes (402a, 402b, 402c) an das Client-Gerät (104), um das Betrachten und Bearbeiten der Daten in dem aktualisierten Zieldatensatz über eine gemeinsame Schnittstelle zu ermöglichen, die von dem Intermediation-Server (124) bereitgestellt wird, wobei die gemeinsame Schnittstelle das Client-Gerät (104) in die Lage versetzt, Anfragen zur Aktualisierung von Datenfeldern des aktualisierten Zieldatensatzes (402) über den durch das Flag (600) angezeigten Erzeugungsmechanismus zu erzeugen.

2. Verfahren nach Anspruch 1, wobei das Vergleichen des ersten Satzes von Datenfeldern mit dem zweiten Satz von Datenfeldern umfasst:
a. Abrufen einer Feldabbildung, die für jedes Feld des ersten Satzes von Datenfeldern ein entsprechendes Feld des zweiten Satzes identifiziert; und
b. Vergleichen jedes des ersten Satzes von Datenfeldern mit dem entsprechenden Feld des zweiten Satzes gemäß der Feldabbildung.

3. Verfahren nach Anspruch 1 oder Anspruch 2 ferner umfassend ein Speichern einer Angabe (704) in jedem zusammengeführten Datenfeld, dass das zusammengeführte Datenfeld mit dem Ursprungsdatensatz (418) verknüpft ist.

4. Verfahren nach Anspruch 3, wobei die Angabe (704), dass das zusammengeführte Datenfeld mit dem Ursprungsdatensatz (418) verknüpft ist, den ersten eindeutigen Identifier (420) umfasst.

5. Verfahren nach einem der Ansprüche 1 bis 4, wobei das Vergleichen umfasst:
a. Bestimmen einer Ähnlichkeitsmetrik für jedes Datenfeld des ersten Satzes und des entsprechenden Datenfeldes des zweiten Satzes; und
b. Erkennen einer Übereinstimmung zwischen dem Datenfeld des ersten Satzes und dem entsprechenden Datenfeld des zweiten Satzes, wenn die Ähnlichkeitsmetrik über einem Schwellenwert liegt.

6. Intermediation-Server (124) zur Integration von Datenobjekten, der Folgendes umfasst:
a. eine Kommunikationsschnittstelle (208);
b. einen Speicher (204), der ein erstes Repository (132) und ein zweites Repository (128) speichert; und
c. einen Prozessor (200), der mit der Kommunikationsschnittstelle und dem Speicher verbunden ist, wobei der Prozessor so eingerichtet ist, dass er das Verfahren nach einem der Ansprüche 1 bis 5 ausführt.

7. Computerprogrammprodukt mit auf einem computerlesbaren Medium gespeicherten Programmcodeanweisungen zur Ausführung der Verfahrensschritte nach einem der Ansprüche 1 bis 5, wenn das Programm auf einem Computer ausgeführt wird.

## Revendications

1. Méthode d'intégration d'objets de données, la méthode comprenant :
a. le stockage, au niveau d'un serveur d'intermédiation (124) tenant à jour un premier référentiel (132) et un deuxième référentiel (128), (i) d'un enregistrement d'origine (418) contenant un premier identifiant unique (420) et un premier ensemble de champs de données définissant un premier élément, généré par un premier mécanisme de génération et fourni par un premier fournisseur, dans le premier référentiel (132), et (ii) d'un enregistrement de destination (402) contenant un deuxième identifiant unique (404) et un deuxième ensemble de champs de données définissant un deuxième élément, généré par un deuxième mécanisme de génération et fourni par un deuxième fournisseur, dans le deuxième référentiel (128) ;
b. la réception (305), au niveau du serveur d'intermédiation (124), en provenance d'un dispositif client (104), d'une instruction (400) de fusion de l'enregistrement d'origine (418) en l'enregistrement de destination (402), l'instruction (400) contenant les premier et deuxième identifiants uniques (404, 420) ;
c. en réponse à la réception de l'instruction (400), la mise à jour de l'enregistrement de destination dans le deuxième référentiel (128) par :
i. stockage du premier identifiant unique (420) dans l'enregistrement de destination (402) ;
ii. comparaison (310, 315, 320) du premier ensemble de champs de données au deuxième ensemble de champs de données ;
iii. pour chaque champ de données du premier ensemble qui correspond à un champ de données correspondant au deuxième ensemble, marquage (330) du champ de données correspondant au deuxième ensemble dans l'enregistrement de destination (402) comme champ partagé ; et
iv. pour chaque champ de données du premier ensemble qui ne correspond pas à un champ de données correspondant au deuxième ensemble, création (335) d'un champ de données fusionné dans l'enregistrement de destination (402), insertion dans celui-ci du contenu du champ de données correspondant au premier ensemble dans l'enregistrement d'origine (418) et marquage du champ de données fusionné comme étant associé à l'enregistrement d'origine par stockage d'un indicateur (600) avec le champ fusionné qui indique le mécanisme de génération par lequel le contenu du champ fusionné a été obtenu ; et
d. l'envoi (345) de l'enregistrement de destination mis à jour (402a, 402b, 402c) au dispositif client (104) pour permettre la visualisation et l'édition des données dans l'enregistrement de destination mis à jour via une interface commune fournie par le serveur d'intermédiation (124),
dans laquelle l'interface commune permet au dispositif client (104) de générer des demandes de mise à jour de champs de données de l'enregistrement de destination mis à jour (402) via le mécanisme de génération indiqué par l'indicateur (600).

2. Méthode selon la revendication 1, dans laquelle la comparaison du premier ensemble de champs de données au deuxième ensemble de champs de données inclut :
a. la récupération d'un mappage de champ identifiant, pour chaque champ de données du premier ensemble de champs de données, un champ correspondant au deuxième ensemble ; et
b. la comparaison de chaque champ de données du premier ensemble de champs de données au champ correspondant au deuxième ensemble, selon le mappage de champ.

3. Méthode selon la revendication 1 ou la revendication 2, comprenant en outre le stockage, dans chaque champ de données fusionné, d'une indication (704) selon laquelle le champ de données fusionné est associé à l'enregistrement d'origine (418).

4. Méthode selon la revendication 3, dans laquelle l'indication (704) selon laquelle le champ de données fusionné est associé à l'enregistrement d'origine (418) inclut le premier identifiant unique (420).

5. Méthode selon l'une quelconque des revendications 1 à 4, dans laquelle la comparaison inclut :
a. la détermination, pour chaque champ de données du premier ensemble et le champ de données correspondant au deuxième ensemble, d'une métrique de similarité ; et
b. la détection d'une correspondance entre le champ de données du premier ensemble et le champ de données correspondant au deuxième ensemble lorsque la métrique de similarité est supérieure à un seuil.

6. Serveur d'intermédiation (124) pour intégrer des objets de données, comprenant :
a. une interface de communication (208) ;
b. une mémoire (204), stockant un premier référentiel (132) et un deuxième référentiel (128) ; et
c. un processeur (200) connecté à l'interface de communication et à la mémoire, le processeur étant configuré pour :
réaliser la méthode selon l'une quelconque des revendications 1 à 5.

7. Produit programme d'ordinateur comprenant des instructions de code de programme stockées sur un support lisible par ordinateur pour exécuter les étapes de méthode selon l'une quelconque des revendications 1 à 5 lorsque ledit programme est exécuté sur un ordinateur.
